# EUROPÄISCHE PATENTSCHRIFT

(11) **EP 1 600 424 B1**
(45) Veröffentlichungstag und Bekanntmachung des Hinweises auf die Patenterteilung: **16.05.2007**
(21) Anmeldenummer: 05009555.3
(22) Anmeldetag: 30.04.2005
(51) Int. Cl.: C02F 1/28, B01J 20/06, B01J 20/32

(54) **Schäume zur Entfernung von Schadstoffen und/oder Schwermetallen aus Strömbaren Medien**
Foams for the removal of pollutants and/or heavy metals from fluid media
Mousses pour l'élimination de polluants et/ou métaux lourds de fluides

(30) Priorität: 05.05.2004 DE 102004022766
(43) Veröffentlichungstag der Anmeldung: 30.11.2005
(73) Patentinhaber: LANXESS Deutschland GmbH, 51369 Leverkusen (DE)
(72) Erfinder: Wurth, Bernd, 42929 Wermelskirchen (DE); Lehmann, Bernd, 51061 Köln (DE); Novak, Klaus-Dieter, Dipl.-Ing., 47441 Moers (DE); Kathrein, Hendrik, Dr., 41515 Grevenbroich (DE); Schlegel, Andreas, Dr., 47800 Krefeld (DE)

(56) Entgegenhaltungen:
- DE-A1- 10 210 786
- FR-A- 2 624 758
- US-A- 5 997 747
- KATSOYIANNIS I A ET AL: "Removal of arsenic from contaminated water sources by sorption onto iron-oxide-coated polymeric materials" WATER RESEARCH, PERGAMON PRESS, OXFORD, GB, Bd. 36, Nr. 20, Dezember 2002 (2002-12), Seiten 5141-5155, XP004387246 ISSN: 0043-1354

## Beschreibung

Die vorliegende Erfindung betrifft Schäume enthaltend ein adsorbierendes Mittel, ein Verfahren zu ihrer Herstellung sowie deren Verwendung.

Schadstoffe und/oder Schwermetalle wie beispielsweise eine Phospatbelastung findet man z.B. in Aquarien- und Teichwasser. Phosphationen werden über das Fischfutter und durch Ausscheidungen in das Wasser eingetragen, was ein starkes Algenwachstum zur Folge hat. Will man dieses verhindern, ist es erforderlich, das Wasser regelmäßig zu tauschen, was insbesondere bei Seewasseraquarien zu erheblichen Kosten führt, oder Phospat mit Hilfe von Absorbern aus dem Wasser zu entfernen.

Ein erhöhter Arsengehalt wird z.B. in einigen Grundwasserquellen angetroffen.

Bisher bekannte Verfahren zur Entfernung von Schadstoffen und/oder Schwermetallen wie Phosphat, Arsen und einigen anderen Ionen aus strömbaren Medien wie Wasser beruhen auf der Adsorption an verschiedenen Substanzen oder auf Ionenaustausch.

Der Handel bietet granulierte Produkte an, die in Wasserfilter eingebracht werden. Als effektiv erweist sich z.B. granuliertes Eisenhydroxid wie es in DE-A 4 320 003 beschrieben wird. JP 08089951 beschreibt mit Aluminium- oder Eisenhydroxid gefüllte Filter. Hierbei muss der verbrauchte Adsorber nach der Standzeit erneuert werden. Wichtig dabei ist eine ausreichende Porosität des Filtermaterials, um einen genügenden Durchfluss zu gewährleisten, wobei die Füllhöhe der Adsorberschicht einen Einfluss auf die Durchflussgeschwindigkeit des Wassers hat.

Nachteilig ist die umständliche Handhabung von losen Filtermaterialien und die Trübung des Wassers durch feinteiligen Filterdurchschlag, der bei Erstbefüllung und Adsorbatwechsel entsteht. Die bereits erwähnte JP 08089951 beschreibt beispielsweise die Aufarbeitung von Schlamm.

US A1 5124044 beschreibt ein Verfahren zur Imprägnierung von Schwämmen mit Eisenchlorid und Ammoniaklösung, um Fe(OH)₃ im Schwamm auszufällen. Diese Reaktion ist jedoch in der Praxis nur schwer kontrollierbar. In JP 06277504 ist die Herstellung eines Absorbers durch Mischen von Mikropartikeln mit einem Gel und anschließender Entwässerung dargestellt. Die US 5997747 beschreibt ein Verfahren zur Absorption von Phosphaten durch Eisenoxide enthaltenden offenporigen Schaum.

Der Erfindung lag die Aufgabe zu Grunde, einen Schaum für den Einsatz in strömbaren Medien bereitzustellen, der Schadstoffe und/oder Schwermetalle aus strömbaren Medien wie Wasser entfernt, sowie wenige Trübstoffe in strömbaren Medien hinterlässt verglichen mit losen Filtermaterialien.

Diese Aufgabe wurde gelöst durch Schäume enthaltend ein adsorbierendes Mittel nach Anspruch 1. Schaum in Sinne der Erfindung bedeutet die Dispersion von Gas im Feststoff wie beispielsweise ein geschäumtes Feststoff und/oder Kunststoff.

Das adsorbierende Mittel enthält eine Eisenoxyhydroxidstruktur auf der Basis von α-, β-, γ- δ-, und/oder Fe(OH)₂ -Phasen, Ferrihydritsowie Misch- und Zwischenphasen derselben.

Zusätzlich können vorzugsweise Eisencarbonate eingesetzt werden und/oder die Eisenoxyhydroxide können vorzugsweise mit Oxiden und/oder /(Oxi)hydroxiden der Elemente Al, Mg, Ti verfestigt werden.

Das adsorbierende Mittel weist eine BET-Oberfläche von > 100 m²/g auf. Die Bestimmung der BET-Oberfläche erfolgt dabei über das Trägergasverfahren (He:N₂=90:10) nach der Einpunkt-Methode, gemäß DIN 66131 (1993). Vor der Messung wird die Probe 1 h bei 140 °C im trockenen Stickstoffstrom ausgeheizt.

Das adsorbierende Mittel besteht aus Granalien, die eine mittlere Teilchengröße von 0,5 bis 2 mm aufweisen. Granalien in Sinne der Erfindung bedeutet ein asymmetrischer Aggregat, dass keine harmonischer geometrischer Form aufweist. Ein Beispiel von Granalien, die diese Erfordernisse erfüllen, ist Bayoxide® E33.

Der Schaum wird vorzugsweise mit einem Polyol-Gemisch hergestellt.

Die Schäume enthalten einen Polyurethanschaum, Polyethylenschaum, Polystyrolschaum oder Mischungen davon.

Sofern ein Polyurethanschaum als Schaum eingesetzt wird, wird vorzugsweise ein Polyurethanweichschaum, bevorzugt ein hydrophiler Polyurethanweichschaum verwendet.

Der Schaum wird ferner als Flockenverbundschaum oder Verbundschaum hergestellt. Ein Flockenverbundschaum oder Verbundschaum in Sinne der Erfindung sind Schäume, die aus Schaumstoffabfällen unter Einsatz eines Binders und Einwirkung von Hitze zu Verbundblöcken gepresst und anschließend in jede gewünschte Form geschnitten werden. Beim Konfektionieren von beispielsweise Polyurethan-Weichblockschaum oder als Ausschussteile bei der Produktion von Polyurethan-Weichformschaum fallen beispielsweise mehr oder weniger große Mengen an Weichschaumabfällen an. Diese lassen sich anschließend in sogenannten Flockenmühlen zerkleinern. Die nach diesen Arbeitsschritt erhaltenen Flocken unterschiedlicher Große werden dann in einer Mischtrommel mit Binder besprüht, das Gemisch daraufhin in eine geeignete Form gefüllt, auf 50% bis 10% der Füllhöhe verpresst, ausreagiert und zum Schluss entformt. Der Flockenverbundschaum weist vorzugsweise Hohlräume auf, die ggf. mit adsorbierenden Mitteln gefüllt sind.

Vorzugsweise werden die Schäume aus einen Polyurethanweichschaum hergestellt, die ein adsorbierendes Mittel aus Eisenoxyhydroxid-Granalien enthalten, wobei die Granalien eine BET-Oberfläche von > 100 m²/g und eine mittlere Teilchengröße von 0,01 bis 2 mm aufweisen. Der Gehalt an adsorbierendem Mittel, bezogen auf die Gesamtmasse an Schaum, beträgt 5 bis 45 Gew.-%.

Beschrieben wird weiterhin ein Verfahren zur Herstellung der erfindungsgemäßen Schäume. Dieses Verfahren ist dadurch gekennzeichnet, dass das adsorbierende Mittel einem flüssigen Reaktionsgemisch zugegeben wird und diese verschäumt wird.

Das flüssige Reaktionsgemisch enthält vorzugsweise ein Polyol-Gemisch, eine Isocyanat-Reaktionskomponente und ggf. weitere Zusatz- und Hilfsstoffe. Dabei wird das adsorbierende Mittel zunächst in den Polyolkomponenten vorvermischt bevor es mit einer Isocyanat-Reaktionskomponente und ggf. mit weiteren Zusatz- und Hilfsstoffen zu Schaum verschäumt wird. Als weitere Zusatz- und Hilfsstoffe können beispielsweise geeignete Treibmittel, Silikonstabilisatoren und Reaktionskatalysatoren verwendet werden.

Das adsorbierende Mittel wird beispielsweise in ein Standard-Polyol, wie Polyetheralkohol mit Oxyethylen- und Oxypropylen-Einheiten bei einer mittleren Molmasse von 2000-6000, vorzugsweise Arcol 1108, eingetragen und mit einer Isocyanat-Reaktionskomponente, vorzugsweise Toluylendiisocyanat (TDI) oder Diphenylmethandiisocyanat (MDI), unter Mitverwendung geeigneter Zusatz- und Hilfsstoffe verschäumt. Der Gehalt des adsorbierenden Mittels beträgt zwischen 5 und 45 Gew.-%, bezogen auf die Gesamtmasse an Schaum. Die so gefertigten Schäume werden dann passgenau konfektioniert und als Produkte in Filtergehäuse eingesetzt. Das Wasser wird zur Reinigung über das Filtermaterial gepumpt.

Die Schäume werden vorzugsweise als Flockenverbundschaum dadurch hergestellt, dass ein Schaumstoff zerkleinert wird, adsorbierendes Mittel zugegeben wird und mit Binder, insbesondere Binder basierend auf Polyurethan-Reaktionskomponenten, wieder zusammen verpresst und ausreagiert wird. Dabei wird bevorzugt ein konventionell hergestellter genuiner, vorzugsweise hydrophil eingestellter Polyurethan-Weichschaumstoff mit Hilfe von Flockenmühlen zerkleinert (geschreddert), mit adsorbierendem Mittel gemischt, und anschließend nach Zugabe von reaktivem Binder auf Polyurethanbasis in geeigneten Formen zu Schaumblöcken als Filterschaum-Schaum ausgehärtet. Unter "genuinem Schaum" wird ein Schaumstoff verstanden, der ohne adsorbierendes Mittel ausgerüstet ist. Der Flockenverbundschaum weist vorzugsweise Hohlräume auf, was für das Filtrieren von strömbaren Medien vorteilhaft sein kann.

Als zu zerkleinernde Schaumstoffe können bspw. auch geeignete Zuschnittreste, die bei der Konfektionierung von Weichblockschaum zwangsläufig anfallen, dienen. Es sind dabei die Zuschnittreste der erfindungsgemäßen Schäume - mit oder ohne das adsorbierendes Mittel - bzw. hydrophil eingestellte Weichschaumstoffe als Schaumflockenmaterial für die Herstellung zu bevorzugen. Dabei könnte ggf. ein höherer Anteil von adsorbierendem Mittel als es sonst mit einer insitu Verschäumung möglich wäre, in die Schäume hineingebracht werden.

Gegenstand der vorliegenden Erfindung ist auch die Verwendung der erfmdungsgemäßen Schäume zur Entfernung von Schadstoffen und/oder Schwermetallen wie Phosphaten, Antimon-, Beryllium-, Selen-, Tellur-, Cyan- und Arsenverbindungen aus strömbaren Medien wie Gasen und/oder Flüssigkeiten wie Wasser oder Abwasser.

Die Schäume können vorzugsweise konfektioniert werden und in Filtergehäuse in beispielsweise Pumpen bei Aquarien, Gartenteichen und/oder sonstigen Trink-, Brauch- bzw. Abwasserreinigungsanlagen eingesetzt werden.

Anhand der nachfolgenden Beispiele wird die Erfindung näher erläutert, ohne dass dadurch eine Einschränkung der Erfmdung bewirkt werden soll.

### Beispiel 1

### Beschreibung der Herstellung von Schäum, der ein adsorbierendes Mittel enthält

Bayoxide® E33 mit einer Granulatgröße von 0,5 - 2 mm und einer BET von 140 m²/g wurde in ein Standard-Polyol-Gemisch, bestehend aus Arcol 1108® als Polyetheralkohol mit Oxyethylen- und Oxypropylen-Einheiten mit einer mittleren Molmasse von 2000-6000 und Desmophen® 41WB01 als hoch ethylenoxidhaltiges Polyetherpolyol vorvermischt und mit Toluylendiisocyanat (Desmodur® T80) als Isocyanat-Reaktionskomponente, unter Mitverwendung weiterer Zusätze und Hilfsstoffe wie Silicon Stabilisator® OS 20 als Silicon Stabilisator, tert. Amin Katalysator Desmorapid® DMEA und Dabco® 33LV, und Desmorapid® SO als Zinn Katalysator, verschäumt. Der Gehalt an adsorbierendem Mittel beträgt 27,8 Gew.-%, bezogen auf die Gesamtmasse an Reaktionsgemisch bzw. 29,5 Gew.-%, bezogen auf die Gesamtmasse an ausreagiertem Schaum unter Berücksichtigung des Gasverlustes durch das gebildete Treibmittel Kohlendioxid. Die so gefertigten hydrophilen Polyurethan-Schaumblöcke wurden zu Prüfkörpern konfektioniert, so dass diese im Filtergehäuse eingesetzt werden konnten.

### Rezeptur:

| | |
|---|---|
| Standard Polyether-Polyol | 25 Gew.-Tle. |
| Ethylenoxidhaltiges Polyetherpolyol | 75 Gew.-Tle. |
| Adsorbierendes Mittel | 60 Gew.-Tle. |
| Wasser (gesamt) | 5,0 Gew.-Tle. |
| Silicon Stabilisator | 1,5 Gew.-Tle. |
| Tert. Amin Katalysator | 0,21 Gew.-Tle. |
| Zinn Katalysator | 0,08 Gew.-Tle. |
| Toluylendiisocyanat | 49,0 Gew.-Tle. |

In den folgenden Beispielen werden die Wirksamkeit der hergestellten Schäume enthaltend ein adsorbierendes Mittel und die Vorteile gegenüber Granulatpulvern in Bezug auf die hydraulischen Eigenschaften (Durchflusswiderstand) und Verunreinigung des Wasser durch feine Partikel demonstriert:

### Beispiel 2

Ein Schaum enthaltend ein adsorbierendes Mittel hergestellt gemäß Beispiel 1 wird in ein Glasrohr eingesetzt und mit 250 ml Leitungswasser überspült. Zum Vergleich wird eine äquivalente Menge Bayoxide® E33 in ein Glasrohr gefüllt, dessen Filterboden aus einer Glasfritte der Größe 1 (100 - 160 µm Porenweite) besteht und ebenfalls mit 250 ml Leitungswasser überspült. Das ablaufende Filtrat wird aufgefangen und in dem Trübungsphotometer LTP 5 der Firma Lange die Trübung gemäß DIN 38404 gemessen. Das Leitungswasser weist eine Trübung (TE-F) von 0,63 auf. Das durch Bayoxide® E33 gelaufene Wasser hat eine Trübung von 7,30 und das durch den Schaum gelaufene Wasser eine Trübung von 1,60.

In Tabelle 1 ist als Vergleich die Trübung standardisierter BaSO₄-Suspensionen mit aufgeführt.

**Tabelle 1: Trübung von Aquarienwasser bei unterschiedlicher Behandlung**

| **Probe** | **Modifizierung** | **TE-F** | **BaSO₄ SO₄ [mg / l]** | **Durchflussmenge [l / h]** |
|---|---|---|---|---|
| I | Schaum mit Bayoxide® E33 | 1,60 | 0,8 | 45 |
| II | Bayoxide® E33 | 7,30 | 3,0 | 45 |
| III | Leitungswasser | 0,63 | 0,3 | - |

Die Ergebnisse demonstrieren, dass der Schaum im Hinblick auf die Abgabe von Trübstoffen erhebliche Vorteile bietet.

Die Wirkungsweise der Schäume enthaltend ein adsorbierendes Mittel wird durch folgende Versuchsanordnung belegt:

### Beispiel 3

Eine mit 2,90 mg/l beladene Phosphatlösung wird durch einen Schaum enthaltend ein adsorbierendes Mittel und zum Vergleich durch eine äquivalente Menge adsorbierendes Mittel gepumpt. Nach 60 Minuten und nach 12 Stunden wurden Proben genommen und auf ihren Phosphatgehalt untersucht. Die Ergebnisse sind in Tabelle 2 zusammengefasst.

**Tabelle 2: Phosphatgehalt von Eluaten (FeOOH-Menge entspricht FeOOH-Gehalt des Schaumes)**

| **Probe** | **Adsorber** | **Durchlaufzeit [Stunden]** | **Phosphatgehalt [mg / l PO₄]** | **Durchflussmenge [l / h]** |
|---|---|---|---|---|
| 1 | Ohne | - | 2,90 | - |
| 2 | Bayoxide® E33 | 1 | 1,05 | 45 |
| 3 | Bayoxide® E33 | 12 | 0,50 | 45 |
| 4 | Schaum mit Bayoxide® E33 | 1 | 2,30 | 45 |
| 5 | Schaum mit Bayoxide® E33 | 12 | 0,38 | 45 |

Die Daten belegen, dass die Wirksamkeit des adsorbierenden Mittels (Bayoxide® E33) nicht durch das Einschäumen beeinträchtigt wird.

In folgendem Beispiel werden die hydraulischen Eigenschaften einer Adsorbatpulverschüttung denen des Schaumes gegenübergestellt:

### Beispiel 4

**Tabelle 3: Abhängigkeit des Durchflusses von der Füllmenge adsorbierendes Mittel**

| **Füllgewicht [g]** | **Füllvolumen [ml]** | **Füllhöhe [mm]** | **Durchfluss [l / h]** |
|---|---|---|---|
| 1,00 | 2 | 2 | 45 |
| 2,00 | 4 | 4 | 14 |
| 5,00 | 10 | 10 | 5 |
| 10,00 | 20 | 20 | <2 |

Tabelle 3 belegt, dass mit steigender Schichtdicke des adsorbierenden Mittels der Durchfluss stark abnimmt.

Im Gegensatz hierzu ändert sich beim Schaum enthaltend ein adsorbierendes Mittel der Durchfluss in Abhängigkeit von der Höhe praktisch nicht, was sehr vorteilhaft für den praktischen Gebrauch ist.

**Tabelle 4: Abhängigkeit des Durchflusses von der Füllmenge Schaumstoff**

| **Füllgewichtäquivalent [g]** | **Füllhöhe** | **Durchfluss [l / h.]** |
|---|---|---|
| 3,0 | 23,5 | 48 |
| 4,0 | 31,0 | 55 |
| 4,0 | 31,0 | 50 |
| 4,0 | 27,0 | 50 |
| 5,0 | 37,0 | 51 |
| 6,0 | 44,0 | 48 |

Die Ursache für die Wirksamkeit des Absorbers ist noch nicht geklärt. Es wird vermutet, dass durch Verwendung von Granalien die Oberfläche der extrem feinteiligen Adsorbatteilchen für Wasser zugänglich bleibt, da durch die Granulatstruktur eine Versiegelung der inneren Granalienoberfläche verhindert wird.

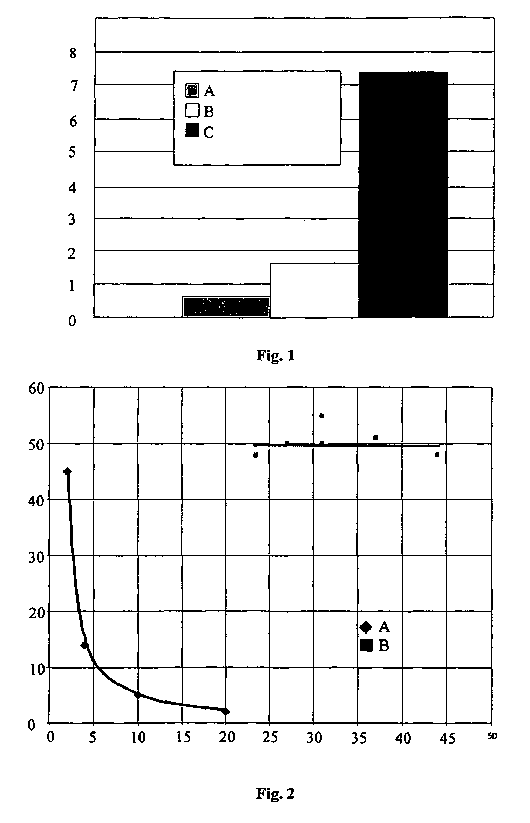

Fig 1 zeigt die Trübung von Aquarienwasser bei unterschiedlicher Behandlung. Die y-Achse zeigt dabei die Trübungszahl TE-F. A steht dabei für Leitungswasser, B für Schaum STD 755 und C für Bayoxide® E33.

Fig. 2 zeigt den Durchfluss bei unterschiedlichen Füllhöhen und fasst Tabelle 3 und 4 zusammen. Die γ-Achse zeigt dabei den Durchfluss in 1 / h, während die x-Achse die Füllhöhe in mm darstellt. A steht für Bayoxide® E33 und B für ein Schaum mit Bayoxide® E33.

## Patentansprüche

1. Schäume enthaltend Eisenoxyhydroxid-Granalien als adsorbierendes Mittel, wobei der Schaum ein Flockenverbundschaum aus Polyurethanschaum, Polyethylenschaum, Polystyrolschaum oder Mischungen davon ist, der Hohlräume aufweist, welche mit den Eisenoxyhydroxid-Granalien gefüllt sind, und die Eisenoxyhydroxid-Granalien eine BET-Oberfläche von > 100 m²/g und eine mittlere Teilchengröße von 0,5 bis 2 mm aufweisen, wobei der Gehalt an Eisenoxyhydroxid-Granalien von 5 bis 45 Gew.-%, bezogen auf die Gesamtmasse an Schaum, beträgt.

2. Verwendung der Schäume enthaltend Eisenoxyhydroxid-Granalien als adsorbierendes Mittel gemäß Anspruch 1 zur Entfernung von Schadstoffen und/oder Schwermetallen, bevorzugt Phosphaten, Antimon-, Beryllium-, Selen-, Tellur-, Cyan- und Arsenverbindungen aus strömbaren Medien, bevorzugt Gasen und/oder Flüssigkeiten, Wasser oder Abwasser **dadurch gekennzeichnet, dass** die Schäume konfektioniert werden und in Filtergehäusen von Pumpen fiir Aquarien, Gartenteiche und/oder Abwasserreinigungsanlagen eingesetzt werden.

## Claims

1. Foams comprising iron oxyhydroxide granules as adsorbent composition, the foam being a composite flock foam made of polyurethane foam, polyethylene foam, polystyrene foam or mixtures thereof having cavities which are filled with the iron oxyhydroxide granules, and the iron oxyhydroxide granules have a BET surface area of > 100 m²/g and a mean particle size of 0.5 to 2 mm, the content of iron oxyhydroxide granules being from 5 to 45% by weight, based on the total mass of foam.

2. Use of the foams comprising iron oxyhydroxide granules as adsorbent composition according to Claim 1 for removing pollutants and/or heavy metals, preferably phosphates, antimony compounds, beryllium compounds, selenium compounds, tellurium compounds, cyano compounds and arsenic compounds from flowable media, preferably gases and/or liquids, water or wastewater, **characterized in that** the foams are end-processed and used in filter housings of pumps for aquaria, garden ponds and/or wastewater purification plants.

## Revendications

1. Mousses comprenant des granules d'oxyhydroxyde de fer en tant qu'agent absorbant, la mousse étant une mousse composite floconneuse composée de mousse de polyuréthane, de mousse de polyéthylène, de mousse de polystyrène ou de leurs mélanges, présentant des cavités qui sont remplies de granules d'oxyhydroxyde de fer, et les granules d'oxyhydroxyde de fer présentant une surface BET supérieure à 100 m²/g et une granulométrie moyenne de 0,5 à 2 mm, la teneur en granules d'oxyhydroxyde de fer étant de 5 à 45 % en poids, par rapport à la masse totale de mousse.

2. Utilisation des mousses comprenant des granules d'oxyhydroxyde de fer en tant qu'agent absorbant selon la revendication 1, pour l'élimination de polluants et/ou de métaux lourds, de préférence de phosphates, de composés de l'antimoine, du béryllium, du sélénium, du tellurium, de cyano et de l'arsenic à partir de milieux fluides, de préférence des gaz et/ou des liquides, l'eau ou les eaux usées, **caractérisée en ce que** les mousses sont soumises à un traitement final et utilisées dans des boîtiers de filtres de pompes, pour des aquariums, des étangs de jardin et/ou des installations de purification des eaux usées.
